# EUROPEAN PATENT SPECIFICATION

(11) **EP 1 668 875 B1**
(45) Date of publication and mention of the grant of the patent: **21.01.2009**
(21) Application number: 04762860.7
(22) Date of filing: 21.09.2004
(51) Int. Cl.: H04M 1/60

(54) **A HANDSFREE KIT FOR A MOBILE TELEPHONE**
FREISPRECH-KIT FÜR EIN MOBILTELEFON
KIT MAINS LIBRES CON U POUR UN TELEPHONE MOBILE

(30) Priority: 24.09.2003 DK 200301387; 13.01.2004 DK 200400030
(43) Date of publication of application: 14.06.2006
(73) Proprietor: GN Netcom A/S, 2750 Ballerup (DK); QuBIT A/S, 2400 Kobenhavn NV (DK)
(72) Inventor: GUDMAND-HOYER, Ole, Magleby, DK-2820 Gentofte (DK)
(74) Representative: Larsen, Hans Ole
(86) International application number: PCT/DK2004/000640
(87) International publication number: WO 2005/029826

(56) References cited:
- EP-A- 0 433 904
- EP-A- 0 920 170
- EP-A- 1 047 249
- US-A1- 2003 076 952

## Description

The invention relates to handsfree kit for a mobile telephone, comprising a circuit coupled between the mobile telephone and a car radio having a loudspeaker, said circuit being adapted to transfer information via a FM modulator/mixer from the mobile telephone to the loudspeaker of the car radio at a call to the mobile telephone, irrespective of whether the car radio is switched on or off, said circuit comprising an RDS generator which generates an RDS signal which is mixed with the FM signal in the FM modulator/mixer via an antenna connector to an antenna input of the car radio.

With the desire of reducing the risk of accidents caused by distraction because mobile telephone users use their mobile telephones when making a call and answering a call with their hands while driving a car, the so-called handsfree telephone kits are offered today, where the users can let the mobile telephone remain in a telephone holder and still conduct a conversation, as the mobile telephone is coupled to the loudspeaker of a car radio.

In addition, a microphone, which is connected to the mobile telephone, may be arranged in the vicinity of the user's head, e.g. in the ceiling of the car.

Generally, these systems have to be installed subsequently and are moreover of a quite complicated structure and are not very flexible, since e.g. an exchange of a mobile telephone to another model or another make may mean that the entire handsfree kit has to be exchanged.

Therefore, it has been attempted to manufacture more flexible and simple handsfree kits, but with the same comfort as the complicated kits. An example of such a less complicated and flexible handsfree kit is known e.g. from the description of the published EP Patent Application No. 920 170 A2, where a mobile telephone uses RDS signals to pass a call to the mobile telephone further on to the mobile radio.

The above-mentioned systems operate such that as soon as a call is made to the mobile telephone, the car radio, and perhaps its extra units, such as cassette player or CD, will be switched off. Further, a call may be received even if the car radio and its extra units are switched off.

The advantage of such a handsfree kit is that the mobile telephone may be operated while it is seated in the holder, and furthermore that a call to or from the mobile telephone has priority over the reception of radio signals by the car radio.

Thus, prioritization of calls to or from the mobile telephone is carried out, which is desirable precisely in connection with the use of mobile telephones in cars.

It is not disclosed or suggested in the above-mentioned EP publication what takes place if a call is made to the mobile telephone during the reception of an RDS signal which arrives as a traffic message.

Accordingly, an object of the invention is to provide a handsfree kit in which RDS signals originating from mobile telephone calls have priority.

The object of the invention is achieved by a handsfree kit of the type defined in the introductory portion of claim 1, which is characterized in that that the antenna connector consists of a relay that is adapted to switch the signals for the car radio between the FM modulatorlmixer and an antenna in such a way that when a signal appears on the output of the FM modulator/mixer, then the antenna will be connected to earth.

It is ensured in this manner that the mobile telephone always has top priority, which is very important to some individuals.

In other words, conflicts between the types of signals transferred to the mobile telephone are avoided, which ensures that a user does not try to answer a call by removing his mobile telephone from its telephone holder.

Further, it is an advantage if, as stated in claim 2, the RDS generating circuit is fed from an output from a call detector, said call detector being fed from an output from a connector that is also connected to an input of the FM modulator/mixer.

Expediently, as stated in claim 3, the circuit additionally has a control circuit which is coupled via an input to a switch for switching the calls of the mobile telephone between the car radio and a headset, thus achieving the advantage that calls of a private nature may rapidly be switched from the loudspeaker of the car radio to the headset.

When, as stated in claim 4, the headset is connected to the circuit via a short range communications link, such as Bluetooth, it is ensured that mobile telephones not already intended for the use of headsets with Bluetooth technology may now be used with Bluetooth technology.

With a view to achieving easy coupling of a handsfree kit according to the invention to any given mobile telephone, irrespective of model or make, it is an advantage if, as stated in claim 5, the circuit contains an interface circuit which is connected to the mobile telephone through a mobile telephone holder.

This easy coupling is ensured additionally if, as stated in claim 6, the interface circuit is connected to the mobile telephone holder via a short range communications link, such as of the Bluetooth type.

The invention will now be explained more fully with reference to the draw ing, in which:
fig. 1 shows the basic structure of a handsfree kit according to the invention, and
fig. 2 shows how the prioritization of calls to the mobile telephone is carried out.

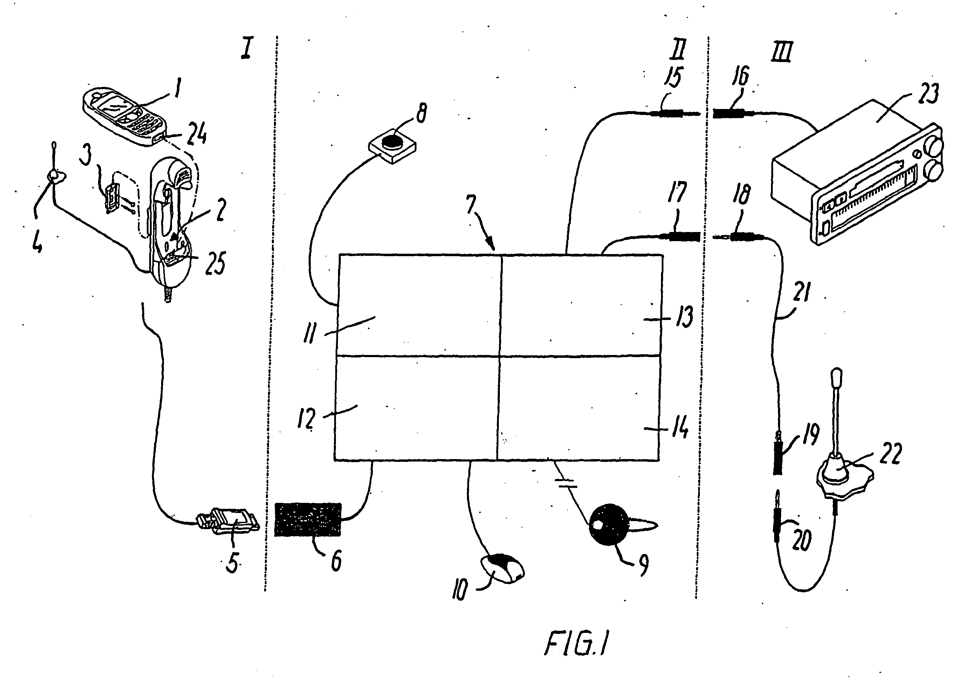

As will be seen in fig. 1, it is divided into three sections, each of which is designated I, II, and III.

The first section contains a mobile telephone 1 which may be arranged in a telephone holder 2. The second section contains an electrical circuit 7 to which, as will be explained later, several units are connected, while the last section contains a car radio 23 which is connected inter alia to the electrical circuit 7.

The mobile telephone 1 may be placed in the telephone holder 2, which may generally be attached in a car (not shown) by means of a bracket 3.

The holder 2 may, although not necessarily, have coupled thereto an external microphone 4, which ensures optimum sound reproduction when the mobile telephone 1 is placed in the holder 2.

As will be seen in section II, the electrical circuit consists of four sub-circuits which are designated 11, 12, 13, and 14.

A switch 8 is connected to the sub-circuit 11, while a connector 6 is provided for the sub-circuit 12 to which a connector 5 with a wire, which is connected to the connector 25 of the telephone holder, may be connected. Generally, wire and connector may advantageously be replaced by a short range communications link, such as of the Bluetooth type.

For the sub-circuit 12, the mobile telephone 1 is connected via an electrical connector 24 to an electrical connector 25 in the telephone holder 2, so that communications signals may be transferred for processing in the circuit 7, as will be explained below.

It is also possible to charge the battery of the mobile telephone by means of the battery of the car, which is wired (not shown) to the holder 2.

Finally, a microphone 10, which may be arranged in the vicinity of the driver of a car, is connected to the sub-circuit 12.

For the sub-circuit 13, a connection to an antenna input on the shown car radio 23 in section III is established by means of the connectors 15 and 16 from an output on the sub-circuit 13.

Further, in section III there is shown an external antenna 22 which may be an antenna mounted on a car or in a window, normally a rear window. This antenna is coupled via connectors and wires 17, 18, 19, 20, and 21 to an antenna input on the sub-circuit 13.

Finally, the sub-circuit 13 performs an automatic switching function, so that the car radio or its connected units, such as CD or tape, are switched off when a call is received.

It will then be explained how the shown setup operates, it being assumed that three types of signal transfer to the loudspeakers of the car radio may occur in the setup, viz.
- ordinary radio reception or playing of CD or tape,
- RDS signal containing traffic messages or warnings,
- telephone calls flanked by an RDS signal.

The circuit is designed in the manner that the sub-circuit 13 prioritizes the three types of signals such that a call to the mobile telephone will always have first priority over the other signals, while radio signals or signals from CD or tape will always have second priority. The system is arranged such that if the RDS function is switched off, the telephone signal can still be received.

The flexibility of the setup according to the invention also has the advantage that, without removing the mobile telephone 1 from the holder 2, the driver may conduct a private conversation, as he just has to affect the switch 8, following which calls are transferred to the headset, which may be coupled to the Bluetooth module.

In a further expedient embodiment, the headset may also be used for listening to the car radio or a CD or a tape, so that passengers avoid having to listen in, which may be an advantage when driving long distances at night, and especially if there are children in the car.

Some important functionalities of the setup are mentioned above, but, of course, it is also possible to adapt the setup to other wishes.

A headset 9 is connected to the sub-circuit 14, preferably by means of a short range communications link of the Bluetooth or DECT type. Further, a microphone 10 is connected to the sub-circuit 14.

The functions of the sub-circuits 11, 12, 13, and 14 will then be explained.

The sub-circuit 11 is a control circuit which allows switching of calls from the car radio 23 to the headset 9, it being possible for the user to make this switching merely by pressing the switch 8. The user may hereby rapidly change a conversation from being "available" to passengers in the car to being of a more private nature.

The sub-circuit 14 may be a Bluetooth radio module which provides the wireless connection to the headset 9.

The sub-circuit 12 is an interface circuit which makes it possible to adapt all the other sub-circuits 11, 13, and 14 to various mobile telephones, irrespective of type or make. For the sub-circuit 12, there may additionally be provided a connection to the battery of a car for powering the entire circuit 7 and for charging the mobile telephone 1.

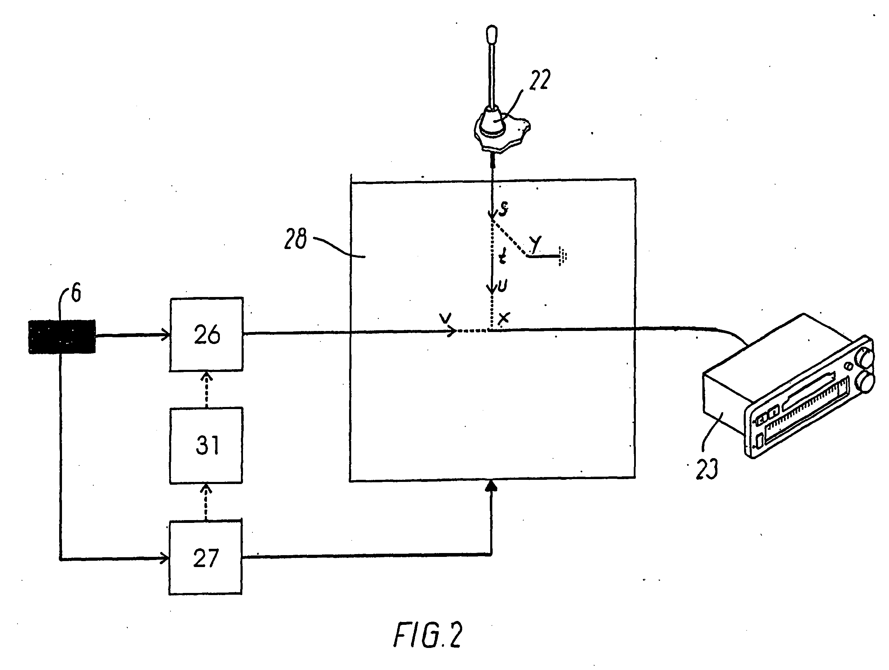

The connector 6, the antenna 22 and the car radio 23 are also shown in fig. 2. As will be seen in the figure, the connector 6 is coupled to an FM modulator/mixer 26 and to a call detector. A signal is fed from an output of the call detector 27 to an RDS generator, which generates an RDS signal which is mixed with the FM signal in the FM modulator/mixer 26. Further, a signal is fed from an output of the call detector to a relay 28 adapted to switch the signals for the car radio between the FM modulator/mixer 26 and the antenna 22, and such that when a signal appears on the output of the FM modulatorlmixer 26, then the antenna 22 will be connected to earth.

The relay 28 operates in the following manner:

For convenience, the terminals of the relay are designated s, t, u, v, x and y. When the car radio is in listen mode, the terminals s and t are connected, and the terminals u and x are connected. When a conversation is conducted through the mobile telephone, the terminals s and y and the terminals v and x are connected.

It will now be explained how the prioritization of calls to the mobile telephone is provided.

When a call is made to the mobile telephone, the audio signal is transferred to the connector 6 and fed further on to the FM modulator/mixer 26, where the audio signal is converted into an FM signal. The call detector 27 generates a control signal for the relay 28, which switches such that the antenna 22 is connected to earth, while the signal from the FM modulator/mixer 26, which has been mixed with an RDS signal, is transferred to the car radio 23. When the conversation has been terminated, the signal from the call detector 27 disappears, which causes the relay 28 to now connect the antenna 22 to the car radio 23, as explained above.

## Claims

1. A handsfree kit for a mobile telephone (1), comprising a circuit coupled between the mobile telephone and a car radio (23) having a loudspeaker, said circuit being adapted to transfer information via a FM modulator/mixer (26) from the mobile-telephone to the loudspeaker of the car radio at a call to the mobile telephone, irrespective of whether the car radio is switched on or off, said circuit comprising an RDS generator which generates an RDS signal which is mixed with the FM signal in the FM modulator/mixer (26), the output of said FM modulator/mixer being connected via an antenna connector to an antenna (22) input of the car radio, **characterised in that** the antenna connector consists of a relay (28) that is adapted to switch the signals for the car radio between the FM modulator/mixer (26) and an antenna (22) in such a way that when a signal appears on the output of the FM modulator/mixer (26), then the antenna (22) will be connected to earth.

2. A handsfree kit according to claim 1, **characterized in that** the RDS generating circuit (31) is fed from an output from a call detector (27), said call detector being fed from an output from a connector (6) that is also connected to an input of the FM modulator/mixer (26).

3. A handsfree kit according to claims 1-2, **characterized in that** the circuit additionally has a control circuit which is coupled via an input to a switch for switching the calls of the mobile telephone between the car radio and a headset.

4. A handsfree kit according to claims 1 -3, **characterized in that** the headset is wired or wilrelessly connected to the circuit, e.g. via a short range communications link, such as Bluetooth or DECT.

5. A handsfree kit according to claims 1-4, **characterized in that** the circuit contains an interface circuit, which is connected to the mobile telephone through a mobile telephone holder.

6. A handsfree kit according to claim 5, **characterized in that** the interface circuit is connected to the mobile telephone holder via a short range communications link, such as of the Bluetooth type.

## Patentansprüche

1. Freisprech-Kit für ein Mobiltelefon (1), umfassend einen Schaltkreis, der zwischen dem Mobiltelefon und einem Autoradio (23) gekoppelt ist, das einen Lautsprecher aufweist, wobei der Schaltkreis dazu eingerichtet ist, Daten bei einem Anruf auf dem Mobiltelefon über einen FM-Modulator/Mischer (26) von dem Mobiltelefon an den Lautssprecher zu übertragen, unabhängig davon, ob das Autoradio ein- oder ausgeschaltet ist, wobei der Schaltkreis einen RDS-Generator umfasst, der ein RDS-Signal erzeugt, das mit dem FM-Signal in dem FM-Modulator/Mischer (26) gemischt wird, wobei der Ausgang des FM-Modulators/Mischers über einen Antennenanschluss mit einem Antenneneingang des Autoradios (22) verbunden ist, **dadurch gekennzeichnet, dass** der Antennenanschluss aus einem Relais (28) besteht, das dazu eingerichtet ist, die Signale für das Autoradio zwischen dem FM-Modulator/Mischer (26) und einer Antenne (22) auf solche Weise umzuschalten, dass, wenn ein Signal an dem Ausgang des FM-Modulators/Mischers (26) auftritt, die Antenne dann (22) geerdet wird.

2. Freisprech-Kit nach Anspruch 1, **dadurch gekennzeichnet, dass** der RDS-Erzeugungsschaltkreis (31) von einem Ausgang von einem Anrufdetektor (27) gespeist wird, wobei der Anrufdetektor von einem Ausgang von einem Anschluss (6) gespeist wird, der auch mit einem Eingang des FM-Modulators/Mischers (26) verbunden ist.

3. Freisprech-Kit nach den Ansprüchen 1-2, **dadurch gekennzeichnet, dass** der Schaltkreis zusätzlich einen Steuerkreis aufweist, der über einen Eingang mit einer Schaltung verbunden ist, um die Anrufe des Mobiltelefons zwischen dem Autoradio und einem Headset umzuschalten.

4. Freisprech-Kit nach den Ansprüchen 1-3, **dadurch gekennzeichnet, dass** das Headset mit dem Schaltkreis verdrahtet oder drahtlos mit diesem verbunden ist, z.B. über eine Nah-Kommunikationsverbindung, wie beispielsweise Bluetooth oder DECT.

5. Freisprech-Kit nach den Ansprüchen 1-4, **dadurch gekennzeichnet, dass** der Schaltkreis eine Schnittstellenschaltung umfasst, die über einen Mobiltelefonhalter mit dem Mobiltelefon verbunden ist.

6. Freisprech-Kit nach Anspruch 5, **dadurch gekennzeichnet, dass** die Schnittstellenschaltung mit dem Mobiltelefonhalter über eine Nah-Kommunikationsverbindung, wie beispielsweise von Typ Bluetooth, verbunden ist.

## Revendications

1. Kit main libre pour un téléphone mobile (1), comprenant un circuit raccordé entre le téléphone mobile et une radio de voiture (23) ayant un haut-parleur, ledit circuit étant adapté pour transférer des informations via un modulateur/mélangeur FM (26) du téléphone mobile au haut-parleur de la radio de voiture au moment d'un appel sur le téléphone mobile, indépendamment de fait que la radio de voiture soit allumée ou éteinte, ledit circuit comprenant un générateur RDS qui génère un signal RDS qui est mélangé au signal FM dans le modulateur/mélangeur FM (26), la sortie dudit modulateur/mélangeur FM étant connectée via un connecteur d'antenne à une entrée d'antenne (22) de la radio de voiture, **caractérisé en ce que** le connecteur d'antenne se compose d'un relais (28) qui est adapté pour commuter les signaux pour la radio de voiture entre le modulateur/mélangeur FM (26) et une antenne (22) de telle façon que lorsqu'un signal apparaît sur la sortie du modulateur/mélangeur FM (26), alors l'antenne (22) sera connectée à la terre.

2. Kit main libre selon la revendication 1, **caractérisé en ce que** le circuit de génération RDS (31) est alimenté depuis une sortie d'un détecteur d'appel (27), ledit détecteur d'appel étant alimenté depuis une sortie d'un connecteur (6) qui est également connecté à une entrée du modulateur/mélangeur FM (26).

3. Kit main libre selon les revendications 1 et 2, **caractérisé en ce que** le circuit possède en outre un circuit de commande qui est raccordé via une entrée à un commutateur pour commuter les appels du téléphone mobile entre la radio de voiture et un casque d'écoute.

4. Kit main libre selon les revendications 1 à 3, **caractérisé en ce que** le casque d'écoute est connecté par câble ou sans fil au circuit, par exemple via une liaison de communication à courte distance telle que Bluetooth ou DECT.

5. Kit main libre selon les revendications 1 à 4, **caractérisé en ce que** le circuit contient un circuit d'interface, qui est connecté au téléphone mobile par le biais d'un support de téléphone mobile.

6. Kit main libre selon la revendication 5, **caractérisé en ce que** le circuit d'interface est connecté au support de téléphone mobile via une liaison de communication à courte distance, telle que du type Bluetooth.
